# EUROPEAN PATENT APPLICATION

(11) **EP 4 651 075 A1**
(43) Date of publication of application: **19.11.2025**
(21) Application number: 24175423.3
(22) Date of filing: 13.05.2024
(51) Int. Cl.: G06T 7/00, G06T 7/62

(54) **METHOD, DEVICE AND SYSTEM FOR INSPECTION OF A BATTERY PRODUCT**

(71) Applicant: LG Energy Solution, Ltd., Seoul 07335 (KR)
(72) Inventor: CHOI, Jin Hyeong, 34122 Daejeon (KR)
(74) Representative: Goddar, Heinz J.

(57) **Abstract**

A computer-implemented method for inspection of a battery product, the method comprising: receiving, from a first detection unit, a first side view of the battery product captured in a first direction with respect to the battery product; and determining, from the first side view, a deformation of the battery product based on an evaluation of outmost boundaries of the battery product in the first side view.

## Description

### TECHNICAL FIELD

The present invention relates to a method for inspection of a battery product, a device for inspection of a battery product, a system for inspection of a battery product as well as a computer-program product and a computer-readable medium for inspection of a battery product.

### BACKGROUND

During the manufacture of a battery cell product, such as a pouch cell, a negative electrode, a separator and a positive electrode are laminated together under heat and pressure, thus obtaining a mono-cell. A plurality of mono-cells are stacked upon one another to obtain a battery product such as a pouch cell.

Due to the fabrication process applying heat and pressure to from the mono cells, the resulting battery product may suffer from deformation such as a curving or a bending. The deformation may lead to reduced performance of the pouch cell or even a dysfunctionality of the pouch cell. It is thus crucial to inspect the pouch cells to determine whether the pouch cell suffers from such deformation.

At present there is no adequate method that allows to inspect a battery product on an industrial scale so as to determine a deformation of the battery product.

### DETAILED DESCRIPTION OF THE INVENTION

### TECHNICAL PROBLEM

It is thus an object of the present disclosure to provide an adequate method to inspect whether a battery product suffers from deformation.

However, the problem to be solved by the embodiments of the present disclosure is not limited to the above-described problem and can be variously expanded within the scope of the technical idea included in the present disclosure.

### TECHNICAL SOLUTION

The objective is solved by the claimed computer-implemented method for inspection of a battery product.

The method comprises receiving from a first detection unit a first side view of the battery product captured in a first direction with respect to the battery product. A battery product, such as a pouch cell, may have or at least may be approximated with the shape of a cuboid, in particular the shape of a planar rectangular cuboid. The first direction is substantially orthogonal to a normal vector of a main surface of the planar rectangular cuboid. The main surface is a surface of the rectangular cuboid having a largest area. In other words the battery product may comprise a first electrode, a separator an a second electrode that are stacked in a stacking direction. The first direction may be perpendicular or substantially perpendicular to the stacking direction. The normal vector of the main surface may be coaxial or substantially coaxial to the stacking direction. The first side view thus is a depiction of the battery product taken from the side of the battery product. In other words, the side view is a cross-sectional projection of the battery product. The configuration of the side view depends on the configuration of the detection unit, which will be further outlined below. In any case the side view contains data that reflect the shape, in particular the contours, of the battery product as viewed from the side, i.e. a direction perpendicular to the main surface of the battery product and/or perpendicular to the stacking direction. In other words, the side view contains data that reflect a cross section of the battery product. The side view may for example be a two-dimensional reproduction of the battery product as viewed from the side. The side view may for example be an image taken from a side of the battery product or an intensity image reflecting the contour of battery product.

The method further comprises determining, from the first side view, a deformation of the battery product based on an evaluation of outmost boundaries of the battery product in the first side view. The outmost boundaries generally define the limits for a minimum bounding box enveloping the battery product in the first side view. The minimum bounding box is a box that has a minimal area while surrounding the battery product in the first side view completely. The outmost boundaries are those boundaries of the battery product that contact a minimum bounding box enveloping the battery product in the first side view. The minimum bounding box may have a rectangular shape or may be a rectangle.

The inventors found that based on the outmost boundaries of the battery product in the first side view, deformation of the battery product can be determined reliably on an industrial scale. In particular, the inventors found that a deformation or a degree of deformation can be determined by the positions of the outmost boundaries. The more the positions of the outmost boundaries of the inspected battery product deviate from the positions of the outmost boundaries of a reference battery product, the larger the deformation of the battery product may be assumed. Thus, based on an evaluation of the outmost boundaries of the battery product in the first side view, a reliable determination that the battery product suffers from deformation can be made.

Based on the determining of the deformation of a battery product a signal can be outputted to sort out the inspected battery product having a deformation, or a signal can be outputted to inform a user about the deformation.

Moreover, since restriction of the evaluation of the battery product is initially limited to the outmost boundaries the number of data points for determining a deformation may be reduced which may reduce computational resources leading to fast processing times or a reduction of hardware requirements.

In one preferable aspect of the present invention, the determining the deformation of the battery product in the first side view comprises: determining, in the first side view, a minimum bounding box enveloping the outermost boundaries of the battery product, determining a first area of the minimum bounding box and a second area corresponding to the battery product within the minimum bounding box; and comparing the first area and the second area to determine the deformation of the battery product.

The first area thus reflects the size of the minimum bounding box. The second area is determined by the contour of the battery product in the side view. The side view may for example contain information such as contrast information that distinguish the battery product from a background in the side view. Thus, boundaries of the battery product in the side view can be determined by conventional algorithms. The second area can be determined from the boundaries.

When the deformation of the battery product increases, the size of the minimum bounding box in the first side view increases, and thus the first area increases. Therefore, a deviation of the first area with respect to the second area indicates the amount of deformation. Thus, by comparing the first area and the second area a degree of deformation can be determined. In some exemplary aspects, the comparing may include generating a ratio of the sizes of the first and the second area. In other exemplary aspects the comparing may include overlaying the first area and the second area and determining a discrepancy of the first and the second area.

In a further aspect of the present invention, the comparing the first area and the second area comprises: determining a difference between a first size of the first area and a second size of the second area; and determining that the deformation of the battery product is unacceptable if the difference exceeds a predetermined threshold value.

The difference between the first size and the second size reflects a deviation of the area of the mounding bounding box in the first side view. The larger the difference is, it can be assumed that the larger the deformation of the battery product is. Hence, if the difference exceeds a given threshold value, it can be determined that the deformation of the battery product in the first side view is unacceptable. The threshold may for example be determined by a reference battery product or by a number of previously measured battery products. In this way, battery product having an unacceptable deformation can be determined.

For example, the method may further include step of outputting a signal to sort out the battery product e.g. to a device configured to sort out the battery product, when an unacceptable deformation of the battery product is determined or the method may further include outputting a signal e.g. to a display unit to inform a user that the inspected battery product is unacceptable.

In a further aspect of the method, the method further comprises receiving, from a second detection unit, a second side view of the battery product captured in a second direction of the battery product, wherein the second direction is different from the first direction, preferably perpendicular to the first direction, determining, from the second side view, a deformation of the battery product based on an evaluation of outmost boundaries of the battery product in the second side view.

Due to the manufacturing process the battery product may suffer from a deformation. The deformation is nevertheless not necessarily apparent in only one direction. Thus, when inspecting a battery cell product only in the first direction a deformation in a second direction may not be apparent. Since the battery product in this aspect is additionally inspected by a second detection unit in second direction with respect to the battery product, a deformation of the battery cell product in a second direction can be determined. The orientation of the battery product with respect to the first detection unit may also be changed by a rotator as described below, thus obtaining the second side view via the first detection unit, wherein the orientation of the battery product is changed between capturing the first and the second sideview.

The first detection unit and the second detection unit maybe of the same type of detection unit. Thus, the second side view has the same configuration than the first side view, wherein the second side view is captured in the second direction and the first side view is captured in the first direction with respect to the battery product. In other aspects the first detection unit and the second detection unit may have different setups.

Moreover, the determining of deformation of the battery product in the second side view may be performed in the same manner as the determining of deformation of the battery product in the first side view of the battery product.

Thus, in one aspect the determining the deformation of the battery in the second side view may comprise: determining, in the second side view, a minimum bounding box enveloping the outermost boundaries of the battery product; determining a first area of the minimum bounding box and a second area corresponding to the battery product within the minimum bounding box in the second side view; and comparing the first area and the second area in the second side view to determine the deformation of the battery product in the second side view.

Moreover, in one aspect the comparing the first area and the second area in the second side view may comprise: determining a difference between a first size of the first area and a second size of the second area in the second side view; and determining that the deformation of the battery product is unacceptable if the difference exceeds a predetermined threshold value.

In a further aspect, the method may further comprise determining that the deformation of the battery product is inacceptable if the determining of the deformation from the first side view and the determining of the deformation from the second side view yields an unacceptable deformation.

Thus, even if the deformation of the battery product is only inspectable in one direction it is likely that the deformation is determined by the claimed method. Therefore, the number of detectable deformations is increased.

In a further aspect, the battery product is planar rectangular cuboid shaped or substantially is planar rectangular cuboid shaped and the first direction and preferably the second direction are perpendicular or substantially perpendicular to a normal vector of a main surface of the battery product. In particular the battery product has the shape or approximately the shape of a planar cuboid and the first direction and preferably the second direction are perpendicular or substantially perpendicular to a normal vector of a main surface of the battery product. Therefore, the side view in the first and preferably the second direction represents a reproduction of the battery product as viewed from the side.

The battery product may comprise at least a first electrode, a second electrode and a separator that are stacked above each other in a stacking direction. The first direction and/or the second direction may be perpendicular or substantially perpendicular to the stacking direction. The normal vector of the main may be substantially coaxial to the stacking direction.

Moreover, the above objective is solved by a device comprising means for carrying out the steps of the method as described previously. The device may for example be a computer, a processor or control unit.

In addition, the above objective is solved by a system for battery inspection, the system comprising: the first detection unit configured to capture the first side view of the battery product in the first direction with respect to the battery product; and the previously mentioned device. Such a system allows to inspect and to determine battery products that show deformation.

According to a further aspect, the system includes the second detection unit configured to capture the second side view of the battery product in the second direction of the battery product, the second direction being different from the first direction, preferably perpendicular to the first direction.

The first detection unit may be arranged so as to capture the first side view of the battery product in the first direction and the second detection unit may be arranged to capture the second side view of the battery product in the second direction, wherein the first and the second directions are different, preferably perpendicular to one another. Therefore, the system has a configuration allowing to inspect the battery product from the first and the second direction to determine a deformation in each of the first and the second direction.

In a further aspect, the first detection unit comprises: an emitter configured to emit electromagnetic beams, and a detector configured to detect the electromagnetic beams spatially resolved in a detector plane having a normal vector in a direction to the emitter; and wherein the first detection unit is configured to receive the battery product in between the detector and the emitter.

In even a further aspect, the second detection unit comprises: an emitter configured to emit electromagnetic beams, and a detector configured to detect the electromagnetic beams spatially resolved in a detector plane having a normal vector in a direction of the emitter; and wherein the second detection unit is configured to receive the battery product in between the detector and the emitter.

The emitter may for example be a light source emitting the electromagnetic beams. The detector may detect the electromagnetic beams spatially resolved in the detection plane. When the battery product is arranged between the detector and the emitter those beams that are blocked by the battery product do not reach the detector, wherein the electromagnetic beams that are not blocked by the batter product reach the detector. The respective detection information may be contained e.g. in a intensity image captured by the detector. In this manner a side view of the battery product can be captured by the respective detection unit. The side view thus reproduces the shape of the battery product. In this manner, a side of the battery product may be obtained.

In some exemplary aspects, the first and/or the second detection unit may be configured to compute the first and/or the second side view from the data detected by the detector and transmit the obtained first and/or the second side view to the device for battery product inspection. In other exemplary aspects, the first and/or the second detection unit may be configured to transmit raw data of the detection to the device, wherein the device is configured to compute the first side view and/or the second side view respectively.

In a further aspect, the electromagnetic beams emitted by the emitter unit are a monochromatic light beams, particularly laser beams. Monochromatic light, in particular laser light, has been found to improve the reproduction of the shape of the battery product in a side view, since, for example, diffraction effects may be reduced.

In one aspect, the first detection unit comprises an imaging device having a sensor spanning a detection plane. In one aspect the second detection unit comprises an imaging device having a sensor spanning a detection plane.

An imaging device, such as a camera, is capable of capturing an image of the battery product in the first direction and/or the second direction. The image, when captured from the side of the battery product, may reproduce a side view of the battery product. Since the imaging deceive is commercially available the aspect thus provides an effective option to realize a system for inspection of a battery product. Moreover, an image visualizes the battery product as viewed by a user. The imaging device may transmit an image containing the side view to the device for inspection of the battery product.

In a further aspect, the system further comprises a battery product rotator configured to rotate the battery product about a rotation axis that is substantially parallel to the detection plane of the detector or to the detection plane of the sensor of the imaging device.

The rotator may thus rotate the battery product with respect to a detection unit, especially the first detection unit. In this manner the first side view and the second side view may be captured from different sides of the battery product. Thus, a deformation of the battery product can be determined in several directions. Furthermore, in according to this aspect only a single detection unit may be needed to detect the side view of the battery product from different directions with respect to the battery module.

Moreover, the above objective is solved by computer program product comprising instructions which, when the program is executed by a computer, cause the computer to carry out the steps of the previously described method for inspection of the battery product.

Even further, the above objective is solved by a computer-readable medium comprising instructions which, when executed by a computer, cause the computer to carry out the steps of the previously described method for inspection of the battery product.

### ADVANTAGEOUS EFFECTS

According to the aspects, a deformation of a battery product, in particular a pouch cell can be reliably determined. The claimed methods and entities are applicable on an industrial scale. Furthermore, the hardware requirements can be reduced allowing for a fast and efficient processing. Moreover, even further based on the determination of deformation a battery product having an unacceptable deformation may be sorted out.

The effects of the present disclosure are not limited to the effects mentioned above and additional other effects not described above will be clearly understood from the description of the appended claims by those skilled in the art.

### BRIEF DESCRIPTION OF THE DRAWINGS

FIG. 1 (a) and (b) show a setup for determining a side view of a battery product in a first configuration.
FIG. 2 (a) and (b) show a setup for determining a side view of the batter product in a second configuration.
Fig. 3 schematically illustrates the determining of a deformation of the battery product.

### DETAILED DESCRIPTION OF THE EMBODIMENTS

The shape of the battery cell product 1 may be approximated by a planar rectangular cuboid. Such cuboid usually has two identical main surfaces on opposing sides. A main surface is a surface with a largest area in size. As apparent from the Figures, a main surface lies within the indicated x-direction and indicated y-direction. The normal vector of a main surface corresponds to the z-direction, which is out of plane and thus not shown. The x-direction, the y-direction and the z-direction are orthogonal. Furthermore, the cuboid comprises two pairs of opposing side surfaces. A side surface may have normal vector in either the x-direction or the y-direction. Each of the side surfaces connects to the two main surfaces on opposing sides. The side surfaces limit the cuboid sidewise. The first direction may generally correspond to the x-direction and/or the y-direction. Moreover, the second direction may generally correspond to the x-direction or the y-direction. In some cases, the first direction corresponds to the y-direction and the second direction corresponds to the x-direction, as shown in the Figures.

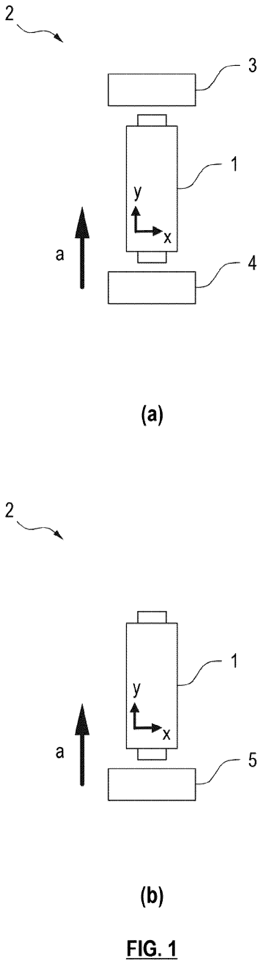

Fig. 1 (a) schematically depicts a top view on a detection unit 2 for determining a side view 6 of a battery product 1. The detection unit 2 includes a detector 3 and an emitter 4, wherein the battery product 1 is arranged in a space between the emitter 4 and the detector 3. The battery product 1 is depicted from a top view, showing a main surface of the battery product 1. The emitter 4 may include one or more light sources such as a laser light sources. In some cases, the emitter 4 may include an emitter 4 plane in which the one or more light sources are arranged. The detector 3 comprises a detection plane that is substantially parallel to the emitter 4 plane. The detector 3 may further include one or more detection devices configured to detect the light emitted by the one or more light sources of the emitter 4. The detection devices are arranged in the detection plane.

The battery product 1 may be arranged between the emitter 4 and the detector 3 such that a main surface of the battery product 1 is orthogonal to the detector 3 plane and preferably the emitter 4 plane. When the battery product 1 is arranged between the emitter 4 and the detector 3, electromagnetic beams emitted by the emitter 4 is partially blocked by the battery product 1, wherein outside of the battery product 1 the light reach the detector 3. In this manner a side view 6 of the battery product 1 may be determined. The side view 6 thus reflects the contour of the battery product 1 as viewed from the side, i.e. in the first or the second direction. In the example of Fig. 1 (a) the side view 6 is captured in the x-direction of the battery product 1. Thereby, the arrow a corresponds to the direction from which the side view of the battery product is taken, e.g. the first direction.

Fig. 1 (b) schematically depicts a top view on a detection unit 2 for determining a side view 6 of the battery product 1 according to another configuration. The detection unit 2 may comprise an imaging device 5. The imaging device 5 may for example include a sensor in a detection plane. The imaging device 5 and particularly the sensor thereof may be configured to detect ambient light reflected from a surface of the battery product 1. The imaging device 5 may for example be a camera.

The battery product 1 may be arranged in front of the imaging device 5 such that a main surface of the battery product 1 is orthogonal to the detection plane of the sensor of the imaging device 5. Thereby, the arrow a corresponds to the direction from which the side view of the battery product is taken, e.g. the first direction.

In this manner a side view 6 of the battery product 1 may be determined. The side view 6 thus reflects the contour of the battery product 1 as viewed from the side, i.e. in the first or the second direction or the x-direction or the y-direction, respectively. The side view as determined by the detection unit exemplary shown in Fig. 1 (a) and Fig. 1 (b) may be an intensity image.

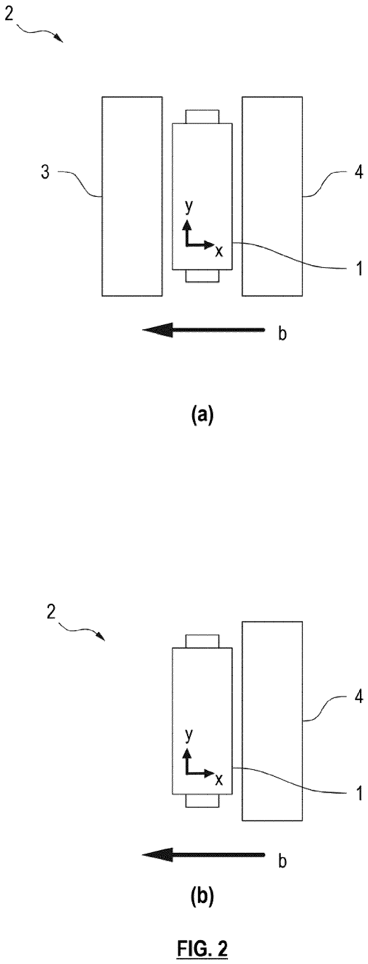

Fig. 2 (a) depicts a top view on a detection unit 2 for determining a side view 6 of a battery product 1. The detection unit 2 shown in Fig. 2 (a) is substantially the same as the detection unit 2 as shown in Fig. 1 (a). However, with respect to the setup as shown in Fig. 1 (a) the battery product 1 is rotated relative to the detection unit 2 such that a side view 6 is captured in the y-direction of the batter product 1. The side view 6 captured in the configuration shown in Fig. 2 (a) thus reflects a side view 6 of the battery product 1 that differs from the side view 6 captured in the configuration as shown in Fig. 1 (a). In particular, the side view 6 shown in Fig. 2 (a) may reflect the side view 6 captured in a second direction wherein the side view 6 shown in Fig. 1 (a) may reflect the side view 6 captured in the first direction, wherein the first direction and the second direction are orthogonal in a plane of the main surface of the battery product 1. Thereby, the arrow b corresponds to the direction from which the side view of the battery product is taken, e.g. the second direction.

Fig. 2 (b) depicts a top view on a detection unit 2 for determining a side view 6 of a battery product 1. The detection unit 2 shown in Fig. 2 (b) is substantially the same as the detection unit 2 as shown in Fig. 1 (b). However, with respect to the setup as shown in Fig. 1(b) the battery product 1 is rotated relative to the detection unit 2 such that a side view 6 is captured in the y-direction of the batter product 1. The side view 6 captured in the configuration shown in Fig. 2 (b) thus reflects a side view 6 of the battery product 1 that differs from the side view 6 captured in the configuration as shown in Fig. 1 (b). In particular, the side view 6 shown in Fig. 2 (b) may reflect the side view 6 captured in a second direction wherein the side view 6 shown in Fig. 1 (b) may reflect the side view 6 captured in the first direction, wherein the first direction and the second direction are orthogonal in a plane of the main surface of the battery product 1. Thereby, the arrow b corresponds to the direction from which the side view of the battery product is taken, e.g. the second direction.

In further examples the battery product 1 may be attached to a rotator configured to rotate the battery product 1 with respect to the detection unit 2. The rotator may have a rotation axis that is substantially perpendicular to the main surface of the battery product 1. In the shown configurations the rotation axis may thus be oriented in the z-direction.

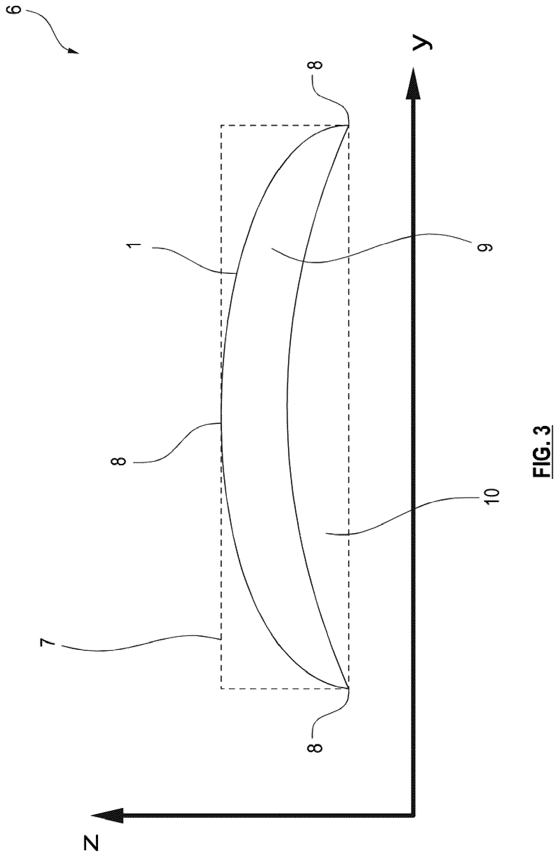

Fig. 3 provides an illustration of a side view 6 as captured by a detection unit 2 and exemplary illustrates a way of determining a deformation e.g. a degree of bending or curving from the side view 6. The depicted side view 6 has been captured in the first direction, e.g. the y-direction as previously indicated.

In a first step, the side view may be received by a device, such as a computer or a control unit.

The side view 6 may be formed by data that contain information on the contour of the battery product 1 as view from the side. The side view 6 may be two-dimensional depiction of a cross-sectional view on the battery product 1. The side view 6 may for example be a two-dimensional image captured by an imaging device 5 or a two-dimensional intensity map captured with aid a detection unit 2 comprising an emitter 4 and detector 3.

As can be taken from Fig. 3, the side view 6 contains an area corresponding to the battery product 1, in particular the battery product 1 as viewed from the side. Furthermore, the side view 6 may contain a further area corresponding to an outside of the battery product 1. The area corresponding to the battery product 1 and the area corresponding to the outside of the battery product 1 may be distinguishable for example by way of a differing contrast or by way of indicators assigned to the different areas in the intensity image. Thus, the contour of the battery product 1 can be determined within the side view 6. The determination can be made by conventional algorisms based for example on the contrast or the indicators of the side view 6.

Furthermore, the detected battery product 1 in the side view 6 can be approached by a minimum bounding box 7. The minimum bounding box 7 is preferably a rectangle. As can be taken from Fig. 3 the minimum bounding box 7 is a box that has a minimal area while surrounding the battery product 1 in the first side view 6 completely. The minimum bounding box 7 thus contacts the battery product 1 in the side view 6 at outermost boundaries 8 of the battery product 1.

In a further step, a first area 9 corresponding to the minimum bounding box 7 is determined. The first area 9 of the minimum bounding box 7 may for example be determined by assigning a two-dimensional coordinate system to the side view 6. Each edge of the minimum bounding box 7 may be assigned to two coordinates in the coordinate system. Each edge of the minimum bounding box 7 may thus be assigned with a first value along a first axis of the coordinate system and a second value of a second axis of the coordinate system. The length of the minimum bounding box 7 may be determined via subtracting the first values of two edges at equal second values or second values that are closest. The height of the minimum bounding box 7 by be determined via subtracting the second values of two edges at qual first values as shown in the present example or at first values that are closest. By multiplying the amounts of the length and the height, the area of the minimum bounding box 7 can be determined.

In a further step, a second area 10 of the battery product 1 in the side view 6 is determined. The second area 10 may be derived from the contours of the battery product 1 in the side view 6, for example using the contrast information of the battery product 1 with respect to the outside or information of the indicators.

Furthermore, the first area 9 of the minimum bounding box 7 and the second area 10 of the battery product 1 may be compared. The comparing may comprise calculating a difference between the size of the first area 9 of the minimum bounding box 7 and the size of the second area 10 corresponding to the battery product 1 in the side view 6. The larger the difference is, the presumably more the rectangular minimum bounding box 7 deviates from the shape of the battery product 1. It can thus be reasonably assumed that the battery product 1 shows a deformation.

Furthermore, a predetermined threshold can be defined. The predetermined threshold may be determined by the size of a reference battery product 1 or the sizes of one or more previously determined battery products 1. If the difference exceeds the predetermined threshold, it can thus be determined that the degree of deformation of the battery product is unacceptable.

If, for example, an unacceptable deformation is determined a signal may be issued that causes a machine to sort out the inspected battery product or a signal may be issued that causes a display or a sound unit 2 to notify a user.

It may be understood that the previously described steps can be performed by a device such as a computer, a control unit or processor. The device may be integrated in a production line of battery products for inspecting the battery products. Furthermore, the device may be integrated in a system for inspection of a battery product.

### DESCRIPTION OF REFERENCE NUMERALS

- 1: battery product
- 2: detection unit
- 3: detector
- 4: emitter
- 5: imaging device
- 6: side view
- 7: minimum bounding box
- 8: outmost boundaries
- 9: first area corresponding to minimum bounding box
- 10: second area corresponding to battery product

## Claims

1. A computer-implemented method for inspection of a battery product (1),
the method comprising:
receiving, from a first detection unit (2), a first side view (6) of the battery product (1) captured in a first direction with respect to the battery product (1); and
determining, from the first side view (6), a deformation of the battery product (1) based on an evaluation of outmost boundaries (8) of the battery product (1) in the first side view (6).

2. The method according to claim 1, wherein the determining the deformation of the battery product (1) in the first side view (6) comprises:
determining, in the first side view (6), a minimum bounding box (7)
enveloping the outermost boundaries (8) of the battery product (1);
determining a first area (9) of the minimum bounding box (7) and a second area (10) corresponding to the battery product (1) within the minimum bounding box (7); and
comparing the first area (9) and the second area (10) to determine the deformation of the battery product (1).

3. The method according to claim 2, wherein the comparing the first area (9) and the second area (10) comprises:
determining a difference between a first size of the first area (9) and a second size of the second area (10); and
determining that the deformation of the battery product (1) is unacceptable if the difference exceeds a predetermined threshold value.

4. The method according to any of the preceding claims, wherein the method further comprises:
receiving, from the first detection unit (2) or a second detection unit (2), a second side view (6) of the battery product (1) captured in a second direction of the battery product (1), wherein the second direction is different from the first direction, preferably perpendicular to the first direction,
determining, from the second side view (6), a deformation of the battery product (1) based on an evaluation of outmost boundaries (8) of the battery product (1) in the second side view (6).

5. The method according to claim 4, further comprising determining that the deformation of the battery product (1) is unacceptable if the determining of the deformation from the first side view (6) and the determining of the deformation from the second side view (6) yields an unacceptable deformation.

6. The method according to anyone of the preceding claims, wherein the battery product (1) has the shape of a planar cuboid and the first direction and preferably the second direction are substantially perpendicular to a normal vector of a main surface of the battery product.

7. A device for battery inspection, the device comprising means for carrying out the steps of the method according to anyone of the preceding claims.

8. A system for inspection of a battery product (1), the system comprising:
the first detection unit (2) configured to capture the first side view (6) of the battery product (1) in the first direction with respect to the battery product (1); and
the device according to claim 7.

9. The system according to claim 8, further comprising:
the second detection unit (2) configured to capture the second side view of the battery product (1) in the second direction of the battery product (1), the second direction being different from the first direction, preferably perpendicular to the first direction.

10. The system according to claim 8 or claim 9, wherein the first detection unit (2) and/or the second detection unit (2) each comprise:
an emitter (4) configured to emit electromagnetic beams, and
a detector (3) configured to detect the electromagnetic beams spatially resolved in a detector plane having a normal vector in a direction of the emitter (4); and
wherein the first detection unit (2) and/or the second unit (2) are configured to receive the battery product (1) in between the detector (3) and the emitter (4).

11. The system according to claim 10, wherein the electromagnetic beams emitted by the emitter unit (4) are monochromatic light beams, particularly laser beams.

12. The system according to anyone of claims 8-11, wherein the first detection unit (2) and/or the second detection unit (2) each comprise an imaging device (5) having a sensor spanning a detection plane.

13. The system according to anyone of claims 8 - 12, further comprising a battery product rotator configured to rotate the battery product (1) about a rotation axis that is substantially parallel to the detection plane of the detector (3) or to the detection plane of the sensor of the imaging device (5).

14. A computer program product comprising instructions which, when the program is executed by a computer, cause the computer to carry out the steps of the method of anyone of claim 1-6.

15. A computer-readable medium comprising instructions which, when executed by a computer, cause the computer to carry out the steps of the method of anyone of claims 1- 6.

## Amended claims

### Amended claims in accordance with Rule 137(2) EPC.

1. A computer-implemented method for inspection of a battery product (1),
the method comprising:
receiving, from a first detection unit (2), a first side view (6) of the battery product (1) captured in a first direction (a) with respect to the battery product (1); and
determining, from the first side view (6), a deformation of the battery product (1) based on an evaluation of outmost boundaries (8) of the battery product (1) in the first side view (6).

2. The method according to claim 1, wherein the determining the deformation of the battery product (1) in the first side view (6) comprises:
determining, in the first side view (6), a minimum bounding box (7)
enveloping the outermost boundaries (8) of the battery product (1);
determining a first area (9) of the minimum bounding box (7) and a second area (10) corresponding to the battery product (1) within the minimum bounding box (7); and
comparing the first area (9) and the second area (10) to determine the deformation of the battery product (1).

3. The method according to claim 2, wherein the comparing the first area (9) and the second area (10) comprises:
determining a difference between a first size of the first area (9) and a second size of the second area (10); and
determining that the deformation of the battery product (1) is unacceptable if the difference exceeds a predetermined threshold value.

4. The method according to any of the preceding claims, wherein the method further comprises:
receiving, from the first detection unit (2) or a second detection unit (2), a second side view (6) of the battery product (1) captured in a second direction (b) of the battery product (1), wherein the second direction (b) is different from the first direction (a), preferably perpendicular to the first direction (a), determining, from the second side view (6), a deformation of the battery product (1) based on an evaluation of outmost boundaries (8) of the battery product (1) in the second side view (6).

5. The method according to claim 4, further comprising determining that the deformation of the battery product (1) is unacceptable if the determining of the deformation from the first side view (6) and the determining of the deformation from the second side view (6) yields an unacceptable deformation.

6. The method according to claim 4 or claim 5, wherein the battery product (1) has the shape of a planar rectangular cuboid and the first direction (a) and preferably the second direction (b) are substantially perpendicular to a normal vector of a main surface of the battery product.

7. A device for battery inspection, the device comprising means for carrying out the steps of the method according to anyone of the preceding claims.

8. A system for inspection of a battery product (1), the system comprising:
the first detection unit (2) configured to capture the first side view (6) of the battery product (1) in the first direction (a) with respect to the battery product (1); and
the device according to claim 7.

9. The system according to claim 8, further comprising:
the second detection unit (2) configured to capture the second side view of the battery product (1) in the second direction (b) of the battery product (1), the second direction (b) being different from the first direction (a), preferably perpendicular to the first direction (a).

10. The system according to claim 8 or claim 9, wherein the first detection unit (2) and/or the second detection unit (2) each comprise:
an emitter (4) configured to emit electromagnetic beams, and
a detector (3) configured to detect the electromagnetic beams spatially resolved in a detector plane having a normal vector in a direction of the emitter (4); and
wherein the first detection unit (2) and/or the second unit (2) are configured to receive the battery product (1) in between the detector (3) and the emitter (4).

11. The system according to claim 10, wherein the electromagnetic beams emitted by the emitter unit (4) are monochromatic light beams, particularly laser beams.

12. The system according to anyone of claims 8-11, wherein the first detection unit (2) and/or the second detection unit (2) each comprise an imaging device (5) having a sensor spanning a detection plane.

13. The system according to anyone of claims 8 - 12, further comprising a battery product rotator configured to rotate the battery product (1) about a rotation axis that is substantially parallel to the detection plane of the detector (3) or to the detection plane of the sensor of the imaging device (5).

14. A computer program product comprising instructions which, when the program is executed by a computer, cause the computer to carry out the steps of the method of anyone of claim 1 - 6.

15. A computer-readable medium comprising instructions which, when executed by a computer, cause the computer to carry out the steps of the method of anyone of claims 1- 6.
